# EUROPEAN PATENT APPLICATION

(11) **EP 3 402 176 A1**
(43) Date of publication of application: **14.11.2018**
(21) Application number: 18175390.6
(22) Date of filing: 24.03.2016
(51) Int. Cl.: H04M 3/493

(54) **TELEPHONE RESERVATION SYSTEM**

(30) Priority: 26.03.2015 JP 2015063733
(62) Divisional of application: 16162276.6
(71) Applicant: Gurunavi, Inc., Tokyo 100-0006 (JP)
(72) Inventor: OKU, Kyuta, Tokyo, 100-0006 (JP); KIMURA, Ryota, Tokyo, 100-0006 (JP); SHIOHATA, Masashi, Tokyo, 100-0006 (JP); SASAKI, Kohei, Tokyo, 100-0006 (JP)
(74) Representative: D Young & Co LLP

(57) **Abstract**

A telephone reservation system includes a reservation receiving unit (101), a storage unit (102), an availability determination unit (103), and an authentication unit (104). The reservation receiving unit receives detailed reservation information pertaining to a shop selected by a user from among a plurality of shops and user information of the user from a user terminal (10) of the user via a telephone line. The storage unit (102) stores vacant seat information of each of the plurality of shops together with corresponding shop identification information. The availability determination unit (103) determines whether a reservation that satisfies the received detailed reservation information is available on the basis of the vacant seat information stored in the storage unit. The authentication unit (104) performs personal authentication through any one of pieces of the user information.

## Description

### BACKGROUND OF THE INVENTION

### 1. Field of the Invention

The invention relates to a telephone reservation system that enables reservation of a shop, such as a restaurant, via an ordinary phone or a cellular phone.

### 2. Description of Related Art

When people desire to eat or drink at a shop, such as a restaurant and izakaya, people often make seat reservations in advance to keep seats and then visit the shop. However, telephone reservations of a shop are allowed only in a time period in which employees are working at the shop. Even in a time period in which employees are working at the shop, but in a time period in which the shop is busy, it is difficult for the shop to respond to a telephone call for reservation, with the result that the shop may miss a reservation. Therefore, there has been suggested a technique for automatically recognizing voice vocalized by a user and allowing the user to make a reservation by providing vacant seat information (Japanese Patent Application Publication No. 2002-215670 (JP 2002-215670 A)).

### SUMMARY OF THE INVENTION

However, with the technique described in JP 2002-215670 A, it is not enough to handle a case where a reservation guest does not come to a shop due to insufficient identification of a user who made a phone call as a remote cause and, as a result, the shop suffers a loss.

The invention provides a telephone reservation system that is able to increase the reliability of identification of a user who made a phone call as compared to an existing technique.

A first aspect of the invention provides a telephone reservation system. The telephone reservation system includes a reservation receiving unit, a storage unit, an availability determination unit, and an authentication unit. The reservation receiving unit receives detailed reservation information pertaining to a shop selected by a user from among a plurality of shops and user information of the user from a user terminal of the user via a telephone line The storage unit stores vacant seat information of each of the plurality of shops together with corresponding shop identification information. The availability determination unit determines whether a reservation based on the detailed reservation information is available by comparing the detailed reservation information with the vacant seat information stored in the storage unit. The authentication unit performs personal authentication through any one of pieces of the user information. In the telephone reservation system, the reservation receiving unit stores detailed reservation information based on which the availability determination unit has determined that a reservation is available at the time when the authentication unit has completed personal authentication, as firm reservation information.

According to the above aspect, a firm reservation is made only when personal authentication has been completed at the time of making a reservation, so information on which the user has not been authenticated is not incorporated as reservation information. Therefore, it is possible to manage only reservation information having a high probability of coming to a shop as the firm reservation information.

In the above aspect, the user information may include a user phone number, and the authentication unit may perform the personal authentication through the user phone number.

According to the above aspect, personal authentication is performed for a phone number that the user easily inputs through telephone operation, so it is possible to perform personal authentication without a burden on the user or providing a new facility.

In the above aspect, the authentication unit may transmit voice information to the user phone number, and the authentication unit may perform personal authentication by receiving user's response to the voice information.

According to the above aspect, it is possible to obtain the results of user's operation at the time of a telephone call during personal authentication by transmitting voice that requires telephone operation, or the like, to the phone number, so it is possible to obtain reliable authentication results irrespective of the type of telephone line.

In the above aspect, the reservation receiving unit may further receive a reservation name of the user as voice data, and the authentication unit may transmit at least the voice data to the user phone number as the voice information.

According to the above aspect, by recording a user name as voice data and reading out a template sentence before and after the voice data, it is possible to easily synthesize voice that confirms the user name.

In the above aspect, the reservation receiving unit may be configured to be able to reproduce the voice data upon request from the shop.

According to the above aspect, it is allowed to listen to a user name as voice data, so it is possible to use the user name at the time of reservation management or customer service.

In the above aspect, the authentication unit may transmit a message to the user phone number by SMS, and the authentication unit may perform personal authentication by receiving from the user a response to information included in the SMS message.

According to the above aspect, it is possible to perform personal authentication by utilizing SMS, so the user is allowed to make a firm reservation without speaking.

In the above aspect, the reservation receiving unit may further receive a reservation name of the user as voice data, and the authentication unit may transmit the reservation name to the shop and perform personal authentication on the basis of a response from the shop.

According to the above aspect, when it is possible to authenticate the user only by hearing a name at a shop, it is not required to perform detailed personal authentication. When it is not possible to authenticate the user only by hearing a name at a shop, it is possible to return the process to another personal authentication process when the shop rejects authentication.

In the above aspect, when the authentication unit has determined that personal authentication is not successful for the shop, the authentication unit may perform personal authentication by using a piece of the user information, other than the reservation name of the user.

According to the above aspect, for a user other than a user who does not need detailed personal authentication, such as a regular customer, it is possible to execute another personal authentication process.

In the above aspect, the reservation receiving unit may receive an input of an identification number of the user as part of the user information, the storage unit may store the user information in association with the identification number of the user, and the authentication unit may authenticate the user on the condition that the identification number of the user is stored in the storage unit.

According to the above aspect, personal authentication may be performed by using the identification number, so it is possible to recommend member registration for assigning an identification number or it is possible to store the identification number and the details of a reservation in association with each other in advance and then allow a shop to obtain the taste, or the like, of a user by using the identification number with reference to the details of the reservation that is stored in association with the identification number.

In the above aspect, the reservation receiving unit may further receive a piece of the user information, other than the identification number, and the authentication unit may authenticate the user on the condition that both the identification number and the piece of the user information, other than the identification number, are stored in the storage unit.

According to the above aspect, it is possible to prevent an input of a wrong identification number or masquerading by others.

According to the aspect of the invention, it is possible to provide a telephone reservation system that is able to increase the reliability of identification of a user who made a phone call as compared to an existing technique.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view that shows the schematic configuration of a telephone reservation system according to an embodiment of the invention;
FIG. 2 is a process flowchart of the telephone reservation system according to the embodiment of the invention; and
FIG. 3 is a flowchart that shows a specific example of the input of reservation information shown in FIG. 2.

### DETAILED DESCRIPTION OF EMBODIMENTS

Hereinafter, an embodiment of the invention will be described with reference to the accompanying drawings. However, the technical scope of the invention is not limited by the following embodiment.

### First Embodiment

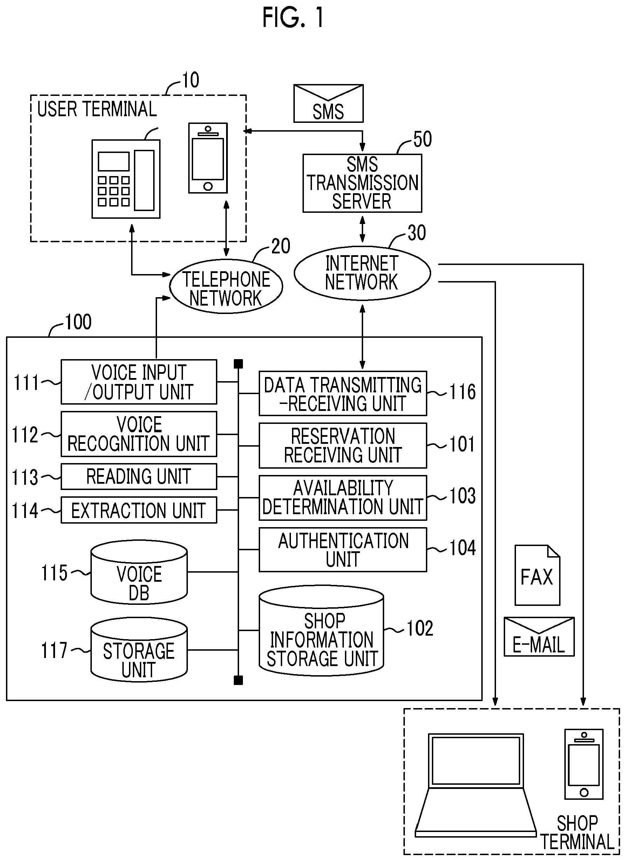

FIG. 1 is a view that shows the schematic configuration of a telephone reservation system 100 according to the embodiment of the invention. The telephone reservation system 100 includes a reservation receiving unit 101, a shop information storage unit 102, an availability determination unit 103 and an authentication unit 104. The telephone reservation system 100 further includes a voice input/output unit 111, a voice recognition unit 112, a reading unit 113, an extraction unit 114, a voice DB 115, a data transmitting-receiving unit 116 and a storage unit 117.

The reservation receiving unit 101 receives detailed reservation information about a shop selected from among a plurality of shops and user information from a user terminal 10 via the data transmitting-receiving unit 116 and the Internet network 30. The detailed reservation information includes a reservation date, reservation start time, the number of people reserved, and the like. The shops include not only restaurants, and the like, which are targets of reservation, but also sports facilities, leisure facilities, and the like. A user selects a shop of which a reservation for usage is desired from among a plurality of shops. The reservation receiving unit 101 receives the detailed reservation information and the user information as information that is required to make a reservation of the shop.

The shop information storage unit 102 stores the vacant seat information of each of the plurality of shops together with corresponding shop identification information. The vacant seat information means information that is required to determine whether tables, or the like, available for the number of people the user desires to make a reservation for are vacant or not at a date and time at which the user desires to make a reservation.

The availability determination unit 103 determines whether a received reservation is available on the basis of the vacant seat information stored in the shop information storage unit 102. The results of determination are transmitted to the user terminal 10 via the voice input/output unit 111 or the data transmitting-receiving unit 116. The availability determination unit 103 desirably determines that a reservation is not available when the number of people for reservation, included in the detailed reservation information, is larger than the number of people available for reservation. The number of people available for reservation is determined on the basis of the detailed reservation information other than the number of people for reservation. The detailed reservation information other than the number of people for reservation includes the reservation date, the reservation start time, and the like. That is, preferably, the number of people available for reservation, which increases or reduces in response to a date, is acquired and then it is allowed to determine whether a reservation is available. For example, ten people are available for reservation from O a.m./p.m., O/O but only two people are available for reservation from X a.m./p.m., X/X.

It is assumed that the vacant seat information is transmitted from each shop to the shop information storage unit 102 whenever necessary and is updated. Alternatively, instead of updating the shop information in the shop information storage unit 102 of the telephone reservation system whenever necessary, at the time of determining whether a reservation is available, the detailed reservation information may be transmitted to a reservation check server (not shown) installed at a location remote from the telephone reservation system 100 via the Internet network 30, and the results of determination as to whether a reservation is available may be received from the reservation check server.

The authentication unit 104 performs personal authentication through any one of pieces of user information received as the user information. A method for personal authentication includes, for example, a method in which the name of a user pronounced by the user is stored in the voice DB 115, the voice is reproduced in the telephone reservation system 100 and is output from a speaker of the user terminal 10 via a telephone network 20, the user listens to the voice, and, when the name is correct, a predetermined numeral is transmitted from the user terminal 10 via the telephone network 20. Alternatively, the voice recognition unit 112 may determine whether a voice print at the time of reception coincides with a voice print at the time of authentication by means of voice print analysis.

The name of the user pronounced by the user is accessible from the shop, and is allowed to be provided to the shop upon request from the shop as needed. Thus, the shop is allowed to verify the name of a user, and is allowed to use the name of a user in detailed service or reservation management.

The reservation receiving unit 101 and the availability determination unit 103, for example, communicate with each other via a telephone line (telephone network). The user information, for example, includes a user phone number. The authentication unit 104, for example, performs personal authentication by transmitting voice information to a user phone number and receives user's response to the voice information. More specifically, for example, the authentication unit 104 transmits voice information ("Are you OO? Press number 1 if you are OO; whereas press number 2 when you are not.") to the user phone number and receives user's response (the input of "1" or "2") to the voice information, thus performing personal authentication.

The authentication unit 104, for example, may perform personal authentication by transmitting a message to a user phone number by short message service (SMS) and receiving user's response to information included in the message.

The reservation receiving unit 101 may receive the name (reservation name) of a user as voice data. For example, the name of a user is pronounced by the user, and the name pronounced by the user is stored in the voice DB 115 as voice data via the telephone network 20 and the voice input/output unit 111. Alternatively, the name of a user may be pronounced by the user, the name pronounced by the user may be received via the telephone network 20 and the voice input/output unit 111 and converted to text data with the use of the voice recognition unit 112, and the name of the user may be stored in the storage unit 117 as text data.

The authentication unit 104 may transmit a reservation name to the shop and may perform personal authentication on the basis of a response from the shop. That is, when it is sufficient for a shop to check a reservation name and further authentication is not required, for example, in the case of a regular customer, information that authentication is complete may be transmitted to the reservation receiving unit 101 as authentication results. When a reservation name is not recognized by a shop, the shop is allowed to transmit the results to the authentication unit 104 so that personal authentication is performed with another method. Thus, it is possible to perform personal authentication without causing a user who is a regular customer to perform unnecessary personal authentication process.

Alternatively, the reservation receiving unit 101 may receive the input of the identification number of a user, the storage unit 117 may store information of the user in association with the identification number of the user, and the authentication unit 104 may perform personal authentication on the condition that the identification number of the user is stored in the storage unit 117. That is, the user has been registered as a member and the identification number has been assigned to the user, so further personal authentication is not required when the identification number is an authorized one. However, an erroneous reservation due to the input of a wrong identification number, or the like, is conceivable, so, for example, a four-digit personal identification number may be further required. Of course, user information other than a personal identification number may also be used.

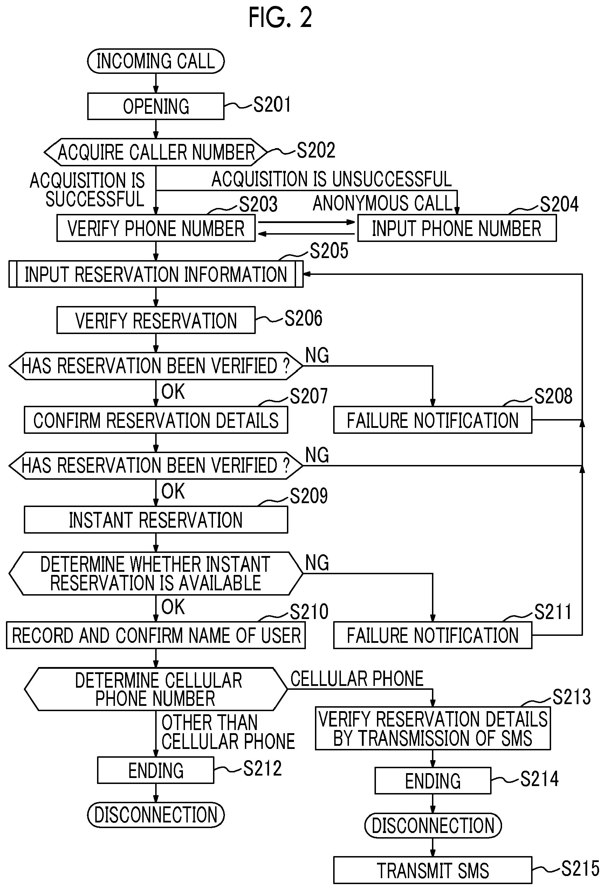

FIG. 2 is a view that shows an example of the flowchart of reservation receiving process. Initially, a user views a website on which information about a shop for which the user desires to make a reservation is provided. The user makes a phone call to a reservation phone number that is shown on the website. The reservation phone number may be a phone number determined shop by shop or may be a one common phone number for the website as a whole. In the latter case, the user is required to input a shop ID, or the like, as the detailed reservation information.

### Opening Step S201

A message that tells that the reservation system has been accessed and for which facility/shop reception of a reservation will be started is read out for a user who made a phone call.

### Caller Number Acquisition Step S202

Acquisition of a caller number is attempted (S202). When the caller number has been acquired, the process proceeds to a phone number verification process (S203); whereas, when the caller number has not been acquired, the process proceeds to a phone number input process (S204).

### Caller Number Verification Step S203

In the caller number verification process (S203), the acquired caller number is conveyed to the user by voice. When the number conveyed by voice is correct, the user is prompted to input a predetermined numeric value; whereas, when the number conveyed by voice is wrong, the user is prompted to input another predetermined numeric value. Thus, it is verified whether the acquired caller number is correct on the basis of the input numeric value. For example, the following message is read out. Your phone number is xxx-xxxx-xxxx, right? If it is correct, press "1"; if you correct the number, press "2".

### Caller Number Input Step S204

In the caller number input process (S204), the user is prompted to input the caller number by voice. For example, the following message is read out. Please input your phone number starting from area code and input the pound sign at the last. Reservation Information Input Step S205

In a reservation information input process (S205), a message that prompts the input of the detailed reservation information (reservation date, reservation start time, the number of people for reservation, and the like) is read out, and the input of the detailed reservation information is received.

### Reservation Verification Step S206

In a reservation verification process (S206), it is verified whether a reservation based on the input detailed reservation information is allowed. The reservation verification process may inquire a reservation verification server (not shown) that is an external resource via the Internet network and receive the results as to whether a reservation is available or not. In the reservation system, a communication unit receives detailed reservation information, the reservation receiving unit 101 receives the detailed reservation information, and the availability determination unit 103 investigates the vacant seat information of each shop, stored in the shop information storage unit 102, and determines whether a reservation is available.

### Reservation Information Verification Step S207

When the results that the reservation is available has been received, the detailed reservation information is read out again, verification of the contents of the detailed reservation information and verification of an intention to make a reservation with that contents are performed to the user.

### Failure Notification Step S208

When the results that the reservation is not available have been received, a message that the reservation is not available is read out.

### Instant Reservation Step S209

When the intention of the user to make a reservation is verified in the reservation information verification process (S207), an instant reservation is made. An inquiry about the instant reservation may be issued to an instant reservation server (not shown) that is an external resource via the Internet network, and the results as to whether instant reservation is available may be received.

### User Name Recording and Verification Step S210

When the fact that the reservation is successful has been received as the results of the instant reservation, a message that the name of the user needs to be recorded and a message that prompts to pronounce the name are read out. After the user pronounces the name of the user, the voice is recorded, the recorded voice is reproduced, and a message that prompts the user to verify whether the reproduced (that is, recorded) name is correct is read out.

### Failure Notification Step S211

When the fact that the reservation is unsuccessful has been received as the results of the instant reservation, a message that the reservation is not available and a message that prompts to retry making a reservation by changing the reservation details are read out.

### Ending Step S212

When the caller number is not a cellular phone number (that is, the caller number is the phone number of a fixed telephone), a message that conveys that registration is complete is read out, and a series of processes are ended. Transmission of a message by SMS is not carried out.

### Reservation Details SMS Transmission Confirmation Step S213

When the caller number is a cellular phone number, a message that asks if the reservation details are allowed to be transmitted by SMS to a cellular phone that is being used to utilize the reservation system, a message that prompts the input of a predetermined number (for example, the input of "1") that is desired to be input by the user when the transmission is allowed, and a message that prompts the input of a predetermined number (for example, the input of "2") that is desired to be input by the user when the transmission is not allowed are read out.

### Ending Step S214

When the numeral (for example, "1") that indicates that transmission of the message by SMS is allowed has been input, a message that conveys that the message is transmitted by SMS, the reservation is complete, and the like, is read out, and a series of processes are ended. When the numeral (for example, "2") that indicates that transmission of the message by SMS is not allowed has been input, a message that conveys that the reservation is complete, and the like, is read out, and a series of processes are ended.

### SMS Transmission Step S215

Information, such as the reservation details and the destination, is transmitted to an SMS transmission server 50 to issue a request to transmit a short message.

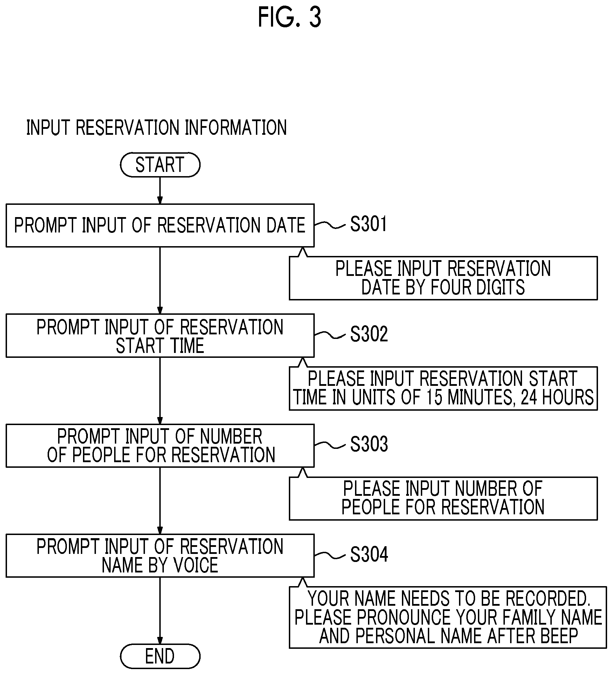

An example of the input of detailed reservation information will be described with reference to FIG. 3. Initially, the input of a reservation date is prompted by reading out the following message (step S301). "Please input a reservation date by four digits." Subsequently, the input of reservation start time is prompted by reading out the following message (step S302). "Please input reservation start time in units of 24 hours and the units of 15 minutes." Subsequently, the input of the number of people for reservation is prompted by reading out the following message (step S303). "Please input the number of people for reservation." Lastly, the input of a reservation name by voice is prompted by reading out the following message (step S304). "Your name needs to be recorded. Please pronounce your name after the beep."

As described above, with the telephone reservation system according to the invention, reception of a reservation and determination as to whether a reservation is available are allowed to be performed any time 24 hours a day, 365 days a year without intervening manpower, and personal identification of a user who made a phone call is provided.

Examples of the present disclosure are provided in the numbered Clauses below:
Clause 1. A telephone reservation system (100) characterized by comprising:
   a reservation receiving unit (101) that receives detailed reservation information pertaining to a shop selected by a user from among a plurality of shops and user information of the user from a user terminal (10) of the user via a telephone line;
   a storage unit (102) that stores vacant seat information of each of the plurality of shops together with corresponding shop identification information;
   an availability determination unit (103) that determines whether a reservation based on the detailed reservation information is available by comparing the detailed reservation information with the vacant seat information stored in the storage unit; and
   an authentication unit (104) that performs personal authentication through any one of the pieces of user information, wherein
   the reservation receiving unit stores detailed reservation information based on which the availability determination unit has determined that a reservation is available at the time when the authentication unit has completed personal authentication, as firm reservation information.
Clause 2. The telephone reservation system according to claim 1, wherein
   the user information includes a user phone number, and
   the authentication unit performs the personal authentication through the user phone number.
Clause 3. The telephone reservation system according to claim 2, wherein
   the authentication unit transmits voice information to the user phone number, and
   the authentication unit performs personal authentication by receiving user's response to the voice information.
Clause 4. The telephone reservation system according to claim 3, wherein
   the reservation receiving unit further receives a reservation name of the user as voice data, and
   the authentication unit transmits at least the voice data to the user phone number as the voice information.
Clause 5. The telephone reservation system according to claim 3 or 4, wherein
   the reservation receiving unit is configured to be able to reproduce the voice data upon request from the shop.
Clause 6. The telephone reservation system according to claim 2, wherein
   the authentication unit transmits text information to the user phone number, and
   the authentication unit performs personal authentication by receiving user's response to the text information.
Clause 7. The telephone reservation system according to claim 6, further comprising:
   a voice recognition unit (112) that converts voice data to text data, wherein
   the reservation receiving unit further receives a reservation name of the user as voice data,
   the voice recognition unit converts the voice data to text data, and
   the authentication unit transmits at least the text data to the user phone number as the text information.
Clause 8. The telephone reservation system according to claim 2, wherein
   the authentication unit transmits a message to the user phone number by SMS, and
   the authentication unit performs personal authentication by receiving from the user a response to information included in the SMS message.
Clause 9. The telephone reservation system according to any one of claims 1 to 8, wherein
   the reservation receiving unit further receives a reservation name of the user as voice data, and
   the authentication unit transmits the reservation name to the shop and performs personal authentication on the basis of a response from the shop.
Clause 10. The telephone reservation system according to claim 9, wherein
   when the authentication unit has determined that personal authentication is not successful for the shop, the authentication unit performs personal authentication by using a piece of the user information, other than the reservation name of the user.
Clause 11. The telephone reservation system according to any one of claims 1 to 10, wherein
   the reservation receiving unit receives an input of an identification number of the user as part of the user information,
   the storage unit stores the user information in association with the identification number of the user, and
   the authentication unit authenticates the user on the condition that the identification number of the user is stored in the storage unit.
Clause 12. The telephone reservation system according to claim 11, wherein
   the reservation receiving unit further receives a piece of the user information, other than the identification number, and
   the authentication unit authenticates the user on the condition that both the identification number and the piece of the user information, other than the identification number, are stored in the storage unit.

## Claims

1. A telephone reservation system (100) **characterized by** comprising:
a reservation receiving unit (101) configured to receive detailed reservation information pertaining to a shop selected by a user from among a plurality of shops and user information of the user from a user terminal (10) of the user via a telephone line, wherein the user information includes a user phone number;
a storage unit (102) configured to store vacant seat information of each of the plurality of shops together with corresponding shop identification information;
an availability determination unit (103) configured to determine whether a reservation based on the detailed reservation information is available by comparing the detailed reservation information with the vacant seat information stored in the storage unit; and
an authentication unit (104) configured to transmit voice information to the user phone number and to perform personal authentication through the user phone number by receiving user's response to the voice information, the authentication unit being further configured to receive a reservation name of the user as voice data, and to transmits at least the voice data to the user phone number as the voice information, wherein
the reservation receiving unit is configured to store detailed reservation information based on which the availability determination unit has determined that a reservation is available at the time when the authentication unit has completed personal authentication, as firm reservation information.

2. The telephone reservation system according to claim 1, wherein
the reservation receiving unit is configured to be able to reproduce the voice data upon request from the shop.

3. The telephone reservation system according to claim 1, wherein
the authentication unit is configured to transmit text information to the user phone number, and
the authentication unit is configured to perform personal authentication by receiving user's response to the text information.

4. The telephone reservation system according to claim 3, further comprising:
a voice recognition unit (112) configured to convert voice data to text data, wherein
the reservation receiving unit being further configured to receive a reservation name of the user as voice data,
the voice recognition unit being configured to convert the voice data to text data, and
the authentication unit being configured to transmit at least the text data to the user phone number as the text information.

5. The telephone reservation system according to claim 1, wherein
the authentication unit is configured to transmit a message to the user phone number by SMS, and
the authentication unit is configured to perform personal authentication by receiving from the user a response to information included in the SMS message.

6. The telephone reservation system according to any one of claims 1 to 5, wherein
the reservation receiving unit is further configured to receive a reservation name of the user as voice data, and
the authentication unit is configured to transmit the reservation name to the shop and performs personal authentication on the basis of a response from the shop.

7. The telephone reservation system according to claim 8, wherein
the authentication unit is configured to perform, when the authentication unit has determined that personal authentication is not successful for the shop, personal authentication by using a piece of the user information, other than the reservation name of the user.

8. The telephone reservation system according to any one of claims 1 to 7, wherein
the reservation receiving unit is configured to receive an input of an identification number of the user as part of the user information,
the storage unit is configured to store the user information in association with the identification number of the user, and
the authentication unit is configured to authenticate the user on the condition that the identification number of the user is stored in the storage unit.

9. The telephone reservation system according to claim 8, wherein
the reservation receiving unit further receives a piece of the user information, other than the identification number, and
the authentication unit authenticates the user on the condition that both the identification number and the piece of the user information, other than the identification number, are stored in the storage unit.
